# EUROPEAN PATENT APPLICATION

(11) **EP 2 640 064 A1**
(43) Date of publication of application: **18.09.2013**
(21) Application number: 13159163.8
(22) Date of filing: 14.03.2013
(51) Int. Cl.: H04N 5/232, G03B 13/36

(54) **Apparatus and method for capturing image in a mobile terminal**

(30) Priority: 14.03.2012 KR 20120025923
(71) Applicant: Samsung Electronics Co., Ltd, Gyeonggi-do 443-742 (KR)
(72) Inventor: Jung, Heung-Sik, 443-742 Gyeonggi-do (KR); Yeo, Dong-Won, 443-742 Gyeonggi-do (KR); Han, Dae-Jung, 443-742 Gyeonggi-do (KR)
(74) Representative: Gover, Richard Paul

(57) **Abstract**

An apparatus for capturing an image in a mobile terminal. The apparatus comprises a camera module arranged to capture image data and a controller. The controller is arranged to process frames using image data received from the camera module in a preview mode in which Continuous Auto Focus, CAF, is performed. The controller is further arranged to capture a frame if a capture signal is received while in the preview mode. The controller is further arranged to measure a change in motion of the captured frame by comparing the captured frame with a previous frame that has undergone AF. The controller is further arranged to determine that the captured frame has not undergone AF if the change in motion of the captured frame is greater than a threshold.

## Description

### BACKGROUND OF THE INVENTION

### Field of the Invention:

The present invention relates to an apparatus and method for capturing images in a mobile terminal. More particularly, the present invention relates to an image capturing apparatus and method capable of capturing images that have undergone Auto Focus (AF), in a mobile terminal.

### Description of the Related Art:

In mobile terminals, a method for focusing on a subject while capturing an image may be classified into Auto Focus (AF) and Fixed Focus (FF). There are several methods for capturing images after performing AF. The most typical method is to perform AF by entering a half shutter action or event and then capturing or photographing a subject by entering a full shutter action or event, using a separate camera hard key or a soft key (e.g., User Interface (UI)) displayed on a camera-mode screen.

Another typical method is to apply Continuous Auto Focus (CAF) that continuously performs AF in a preview mode depending on changes in the screen, and captures a subject at the time the user selects an entry or an input by performing a short or long button press. When performing CAF in a preview mode, a mobile terminal with a camera may display an image preview in a full frame to match with a resolution of the camera, and perform AF in accordance with its AF algorithm, making it possible to maintain the focus by continuously moving the lens no matter what change may occur on the screen.

If the user enters his or her intention to capture the current preview screen with a hard key or a soft key of the mobile terminal while CAF is performed in the preview mode, the screen will be immediately captured. However, if a 'capture' entry is selected by the user before the AF has been completely performed, or while the lens is still moving for focusing (for instance due to rapid screen switching), then images that have not undergone AF may be captured. This may cause a decrease in user confidence in the AF function of the mobile terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to address at least some of the above-mentioned problems and/or disadvantages and to provide at least some of the advantages described below. Accordingly, an aim of certain embodiments of the present invention is to provide an image capturing apparatus and method capable of capturing images that have undergone AF, depending on the user's entry in a mobile terminal.

In accordance with a first aspect of the present invention there is provided an apparatus for capturing an image in a mobile terminal, the apparatus comprising: a camera module arranged to capture image data; and a controller arranged: to process frames using image data received from the camera module in a preview mode in which Continuous Auto Focus, CAF, is performed; to capture a frame if a capture signal is received while in the preview mode; to measure a change in motion of the captured frame by comparing the captured frame with a previous frame that has undergone Auto Focus, AF; and to determine that the captured frame has not undergone AF if the change in motion of the captured frame is greater than a threshold.

If the change in motion of the captured frame is less than or equal to the threshold, the controller may be further arranged to determine that the captured frame has undergone AF and to store the captured frame.

If the captured frame has not undergone AF, the controller may be further arranged to perform AF on the captured frame.

If the captured frame has not undergone AF, the controller may be further arranged to store the captured image after performing AF on the captured image.

If the captured frame has not undergone AF, the controller may be further arranged: to switch to the preview mode; or to display the captured frame before storing the captured frame.

If the captured frame has not undergone AF, the controller may be further arranged to display a message indicating that the captured frame is a frame that has not undergone AF.

If the captured frame has not undergone AF, the controller may be further arranged: to switch to the preview mode if a store signal is not received within a predetermined time; or to store the captured frame if a store signal is received within the predetermined time.

If the captured frame has not undergone AF, the controller may be further arranged: to display the captured frame if a frame view signal is received; and to switch to the preview mode if a preview mode signal is received while displaying the captured frame; and to store the captured frame if a store signal is received.

If the captured frame has not undergone AF, the controller may be further arranged: to store the captured frame; to switch to the preview mode; and to indicate in the preview mode that the previously captured frame has not undergone AF.

Indicating in the preview mode that the previously captured frame has not undergone AF may comprise the controller being arranged to display a previously captured frame in a thumbnail image in the preview mode and to display the thumbnail image differently depending upon whether the frame has undergone AF.

In accordance with a second aspect of the present invention there is provided a method for capturing an image in a mobile terminal, the method comprising: capturing image data; processing frames using captured image data in a preview mode in which Continuous Auto Focus, CAF, is performed; capturing a frame if a capture signal is received while in the preview mode; measuring a change in motion of the captured frame by comparing the captured frame with a previous frame that has undergone Auto Focus, AF; and determining that the captured frame has not undergone AF if the change in motion of the captured frame is greater than a threshold.

If the change in motion of the captured frame is less than or equal to the threshold, the method may further comprise determining that the captured frame has undergone AF and storing the captured frame.

If the captured frame has not undergone AF, the method may further comprises performing AF on the captured frame.

The method may further comprise storing the captured image after performing AF on the captured image.

If the captured frame has not undergone AF, the method may further comprises: switching to the preview mode; or displaying the captured frame before storing the captured frame.

If the captured frame has not undergone AF, the method may further comprise displaying a message indicating that the captured frame is a frame that has not undergone AF.

If the captured frame has not undergone AF, the method may further comprise: switching to the preview mode if a store signal is not received within a predetermined time; and storing the captured frame that has not undergone AF if a store signal is received within a predetermined time.

If the captured frame has not undergone AF, the method may further comprise: displaying the captured frame if a frame view signal is received; switching to the preview mode if a preview mode signal is received while displaying the captured frame; and storing the captured frame if a store signal is received while displaying the captured frame.

If the captured frame has not undergone AF, the method may further comprise: storing the captured frame; switching to the preview mode; and indicating in the preview mode that the previously captured frame has not undergone AF.

Indicating in the preview mode that the previously captured frame has not undergone AF may comprise displaying the previously captured frame in a thumbnail image in the preview mode and displaying the thumbnail image differently depending upon whether the frame has undergone AF.

Another aspect of the invention provides a computer program comprising instructions arranged, when executed, to implement a method in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram showing a structure of a mobile terminal according to an exemplary embodiment of the present invention;
FIG. 2 is a flowchart showing a process of capturing images in a mobile terminal according to a first exemplary embodiment of the present invention;
FIG. 3 is a flowchart showing a process of capturing images in a mobile terminal according to a second exemplary embodiment of the present invention;
FIG. 4 is a flowchart showing a process of capturing images in a mobile terminal according to a third exemplary embodiment of the present invention; and
FIG. 5 is a flowchart showing a process of capturing images in a mobile terminal according to a fourth exemplary embodiment of the present invention.

Throughout the drawings, the same drawing reference numerals will be understood to refer to the same elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

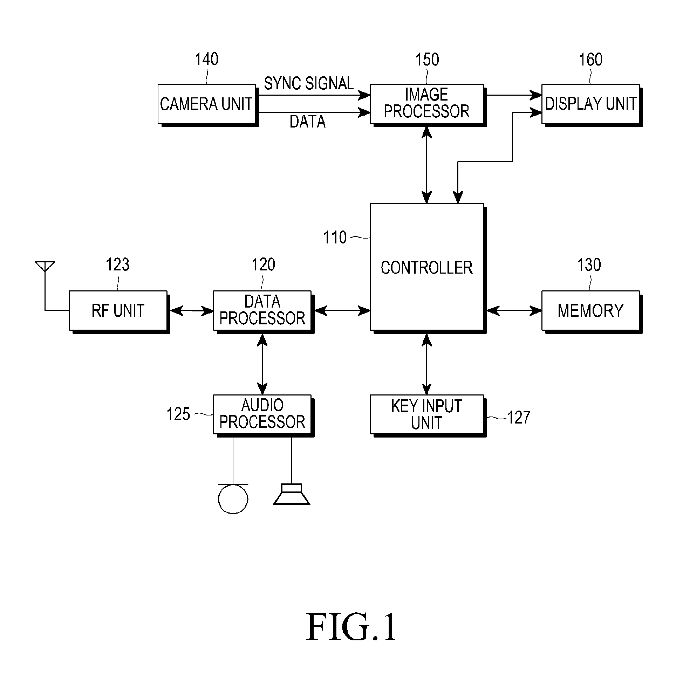

FIG. 1 shows a structure of a mobile terminal according to an exemplary embodiment of the present invention.

Referring to FIG. 1, a Radio Frequency (RF) unit 123 is responsible for radio communication in the mobile terminal. The RF unit 123 includes an RF transmitter for up-converting a frequency of transmission signals and amplifying the up-converted transmission signals, and an RF receiver for low-noise-amplifying received signals and down-converting a frequency of the amplified received signals. A data processor 120 includes a transmitter for coding and modulating the transmission signals, and a receiver for demodulating and decoding the received signals. The data processor 120 may include a modulator/demodulator (modem) and a coder/decoder (codec). The codec includes a data codec for processing data signals such as packet data, and an audio codec for processing audio signals such as voice. An audio processor 125 plays received audio signals output from the audio codec in the data processor 120 using a speaker SPK, and transfers transmission audio signals picked up by a microphone MIC to the audio codec in the data processor 120.

A key input unit 127 includes alphanumerical keys for inputting alphanumerical information and function keys for setting various functions.

A memory 130 may include a program memory and a data memory. The program memory may store programs for controlling the general operation of the mobile terminal, and programs for performing Auto Focus (AF) on a captured frame, automatically switching to a preview mode where Continuous Auto Focus (CAF) is performed, and/or displaying the captured frame before storage thereof, depending on a change in motion of the frame captured while performing CAF in the preview mode. The data memory temporarily stores the data generated during execution of these programs. The memory 130 stores frames that have continuously undergone AF depending on the change in screen in the preview mode where CAF is performed, according to an embodiment of the present invention.

A controller 110 controls the overall operation of the mobile terminal. According to an exemplary embodiment of the present invention, when a `capture' entry is selected by a user while performing CAF in the preview mode, the controller 110 measures a change in motion of the captured frame by comparing the captured frame with a previous frame that has undergone AF. If the change in motion of the captured frame is greater than a threshold, the controller 110 determines that the captured frame has not undergone AF, and so performs AF on the captured frame and then stores it. However, if the change in motion of the captured frame is less than or equal to the threshold, the controller 110 determines that the captured frame has undergone AF and stores the captured frame.

In another embodiment, if the change in motion of the captured frame is greater than a threshold, the controller 110 displays a message indicating that the captured frame is a frame that has not undergone AF, determines that the captured frame has not undergone AF, and automatically switches to the preview mode where CAF is performed, if a 'store' entry is not selected by the user within a predetermined time. If the change in motion of the captured frame is less than or equal to the threshold, the controller 110 determines that the captured frame has undergone AF and stores the captured frame.

In another embodiment, if the change in motion of the captured frame is greater than a threshold, the controller 110 determines that the captured frame has not undergone AF, displays a message indicating that the captured frame is a frame that has not undergone AF, and displays the captured frame before storage thereof, if a 'frame view' entry is selected by the user. If a 'store' entry is selected by the user while displaying the captured frame, the controller 110 stores the captured frame that has not undergone AF, and if a 'preview mode' entry is selected by the user while displaying the captured frame, the controller 110 automatically switches to the preview mode where CAF is performed. However, if the change in motion of the captured frame is less than or equal to the threshold, the controller 110 determines that the captured frame has undergone AF and stores the captured frame.

In another embodiment, if the change in motion of the captured frame is greater than a threshold, the controller 110 displays a message indicating that the captured frame is a frame that has not undergone AF, and then stores the frame that has not undergone AF, determining that the captured frame has not undergone AF. Thereafter, the controller 110 switches to the preview mode where CAF is performed, and displays a message indicating that the previously captured frame has not undergone AF, in the preview mode. In the preview mode where CAF is performed, the previously captured frame is displayed in a thumbnail image, and the controller 110 displays the thumbnail image differently depending on whether the frame has undergone AF.

A camera unit 140 includes a camera sensor for capturing image data and converting a captured optical image signal into an electrical image signal, and a signal processor for converting an analog image signal captured by the camera sensor into digital image data. The camera sensor may be a Charge Coupled Device (CCD) sensor or a Complementary Metal-Oxide Semiconductor (CMOS) sensor, and the signal processor may be realized by a Digital Signal Processor (DSP). The camera sensor and the signal processor may be realized integrally or separately.

An image processor 150 performs Image Signal Processing (ISP) to display the image signals output from the camera module 140 on a display 160. The image processor 150 performs functions such as gamma correction, interpolation, spatial conversion, image effecting, image scaling, Auto White Balance (AWB), Auto Exposure (AE), and AF. The image processor 150 processes the image signals output from the camera module 140 on a frame-by-frame basis, and outputs the frame image data according to the characteristics and size of the display 160. The image processor 150, including a video codec, compresses frame image data displayed on the display 160 using a predetermined coding scheme, and restores or decompresses the compressed frame image data into the original frame image data. The video codec may be a Joint Photographic Experts Group (JPEG) codec, a Moving Picture Experts Group 4 (MPEG4) codec, a Wavelet codec, etc. The image processor 150 is assumed to have an On-Screen Display (OSD) feature, and may output OSD data depending on the size of the displayed screen, under control of the controller 110.

On its screen, the display 160 displays image signals output from the image processor 150, and displays user data output from the controller 110. The display 160 may be a Liquid Crystal Display (LCD). In this case, the display 160 may include an LCD controller, a graphic memory for storing image data, and an LCD panel. When supporting a touch screen feature, the LCD may serve as an input unit. In this case, keys like those on the key input unit 127 may be displayed on the display 160.

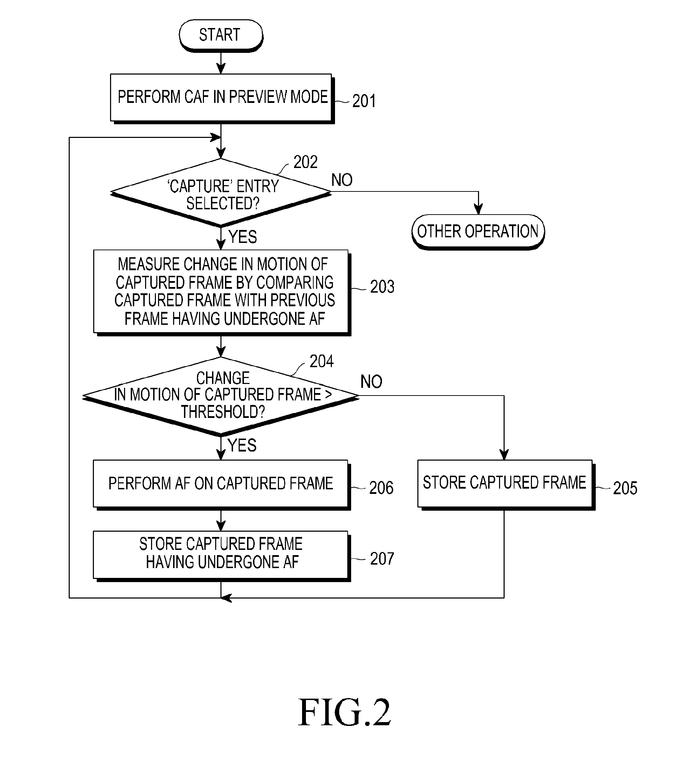

An operation of fine-tuning and capturing images depending on the user's entry in this mobile terminal is described below with reference to FIGs. 2 to 5.

FIG. 2 shows a process of capturing images in a mobile terminal according to a first exemplary embodiment of the present invention. The first embodiment of the present invention will be described with reference to FIGs. 1 and 2 together.

Referring to FIG. 2, while performing CAF in a preview mode in step 201, the controller 110 stores a frame, each time the screen is switched. Specifically, the controller 110 stores a frame each time the screen displays a new image. Alternatively, the controller 110 may store frames at a predetermined rate or in response to an input signal.

If a 'capture' entry is selected by a user in step 202 while performing CAF in the preview mode, the controller 110 measures a change in motion of the captured frame in step 203. In step 203, the controller 110 measures the change in motion of the captured frame by comparing a frame that underwent AF before the selection of the 'capture' entry, with the frame for which the 'capture' entry was selected.

If the change in motion of the captured frame is less than or equal to a threshold in step 204, the controller 110 determines that the captured frame is a frame that has undergone AF and stores the captured frame in step 205.

If the change in motion of the captured frame is greater than the threshold in step 204, the controller 110 determines that the captured frame is a frame that has not undergone AF and performs AF on the captured frame in step 206. In step 207, the controller 110 stores the frame that has undergone AF in step 206.

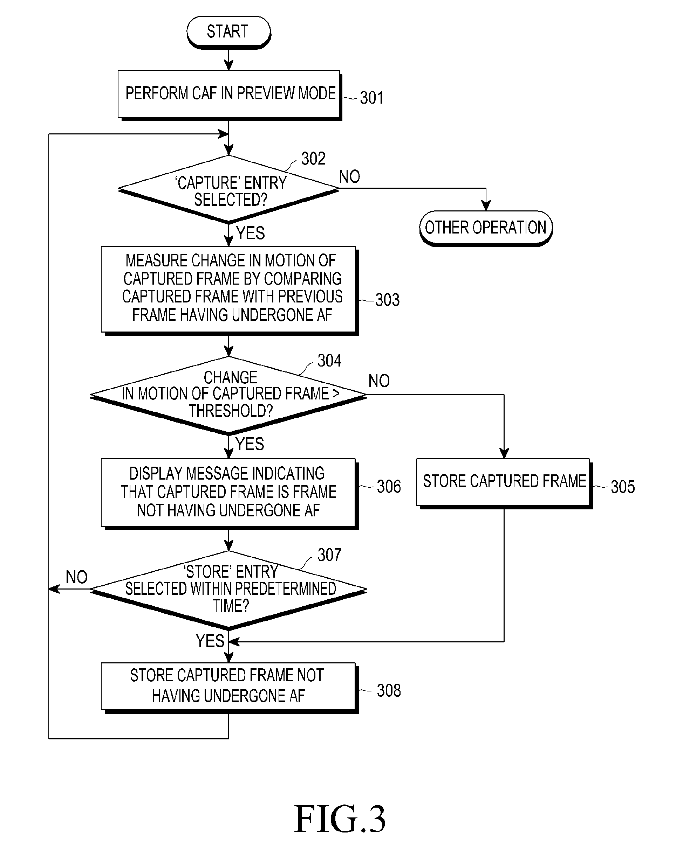

FIG. 3 shows a process of capturing images in a mobile terminal according to a second exemplary embodiment of the present invention. The second embodiment of the present invention will be described in detail with reference to FIGs. 1 and 3 together.

Referring to FIG. 3, while performing CAF in a preview mode in step 301, the controller 110 stores a frame that has undergone AF, each time the screen is switched.

If a 'capture' entry is selected by a user in step 302 while performing CAF in the preview mode, the controller 110 measures a change in motion of the captured frame in step 303. In step 303, the controller 110 measures the change in motion of the captured frame by comparing a frame that underwent AF before the selection of the 'capture' entry, with the frame for which the 'capture' entry was selected.

If the change in motion of the captured frame is less than or equal to a threshold in step 304, the controller 110 determines that the captured frame is a frame that has undergone AF and stores the captured frame in step 305.

If the change in motion of the captured frame is greater than the threshold in step 304, the controller 110 determines that the captured frame is a frame that has not undergone AF and displays in step 306 a message indicating that the captured frame is a frame that has not undergone AF. If a 'store' entry is not selected by the user within a predetermined time in step 307 while displaying the message, the controller 110 automatically switches to the preview mode of step 301 where CAF is performed. If the 'store' entry is selected by the user within the predetermined time in step 307 while displaying the message, the controller 110 stores in step 308 the captured frame that has not undergone AF.

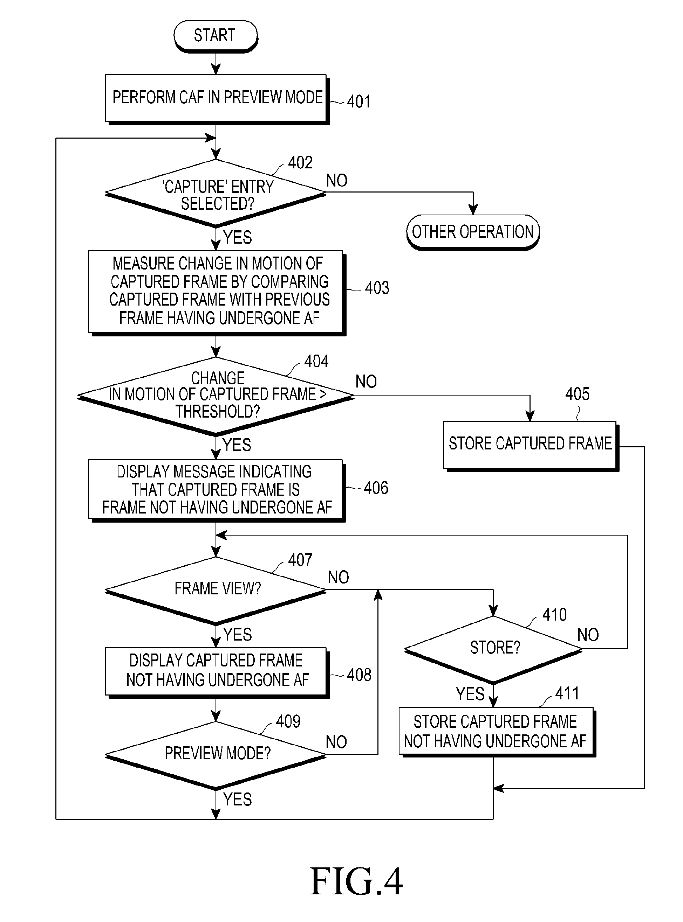

FIG. 4 shows a process of capturing images in a mobile terminal according to a third exemplary embodiment of the present invention. The third embodiment of the present invention will be described with reference to FIGs. 1 and 4 together.

Referring to FIG. 4, while performing CAF in a preview mode in step 401, the controller 110 stores a frame that has undergone AF, each time the screen is switched.

If a 'capture' entry is selected by a user in step 402 while performing CAF in the preview mode, the controller 110 measures a change in motion of the captured frame in step 403. In step 403, the controller 110 measures the change in motion of the captured frame by comparing a frame that underwent AF before the selection of the 'capture' entry, with the frame for which the 'capture' entry was selected.

If the change in motion of the captured frame is less than or equal to a threshold in step 404, the controller 110 determines that the captured frame is a frame that has undergone AF and stores the captured frame in step 405.

If the change in motion of the captured frame is greater than the threshold in step 404, the controller 110 determines that the captured frame is a frame that has not undergone AF and displays in step 406 a message indicating that the captured frame is a frame that has not undergone AF. If a 'frame view' entry is selected by the user in step 407 while displaying the message, the controller 110 displays in step 408 the captured frame that has not undergone AF. If a 'preview mode' entry or a 'cancel' entry is selected by the user in step 409 while displaying the captured frame, the controller 110 automatically switches to the preview mode of step 401 where the CAF is performed.

If a 'store' entry is selected by the user in step 410 while displaying the message in step 406 or while displaying in step 408 the captured frame that has not undergone AF, the controller 110 stores the captured frame that has not undergone AF, in step 411.

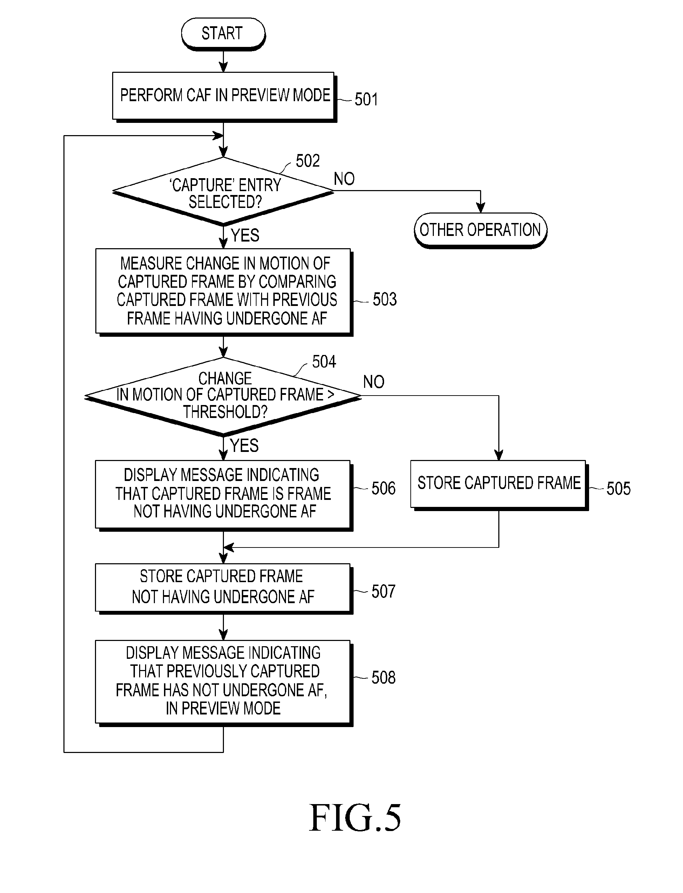

FIG. 5 shows a process of capturing images in a mobile terminal according to a fourth exemplary embodiment of the present invention. The fourth embodiment of the present invention will be described with reference to FIGs. 1 and 5 together.

Referring to FIG. 5, while performing CAF in a preview mode in step 501, the controller 110 stores a frame that has undergone AF, each time the screen is switched.

If a 'capture' entry is selected by a user in step 502 while performing CAF in the preview mode, the controller 110 measures a change in motion of the captured frame in step 503. In step 503, the controller 110 measures the change in motion of the captured frame by comparing a frame that underwent AF before the selection of the 'capture' entry, with the frame for which the 'capture' entry was selected.

If the change in motion of the captured frame is less than or equal to a threshold in step 504, the controller 110 determines that the captured frame is a frame that has undergone AF and stores the captured frame in step 505.

If the change in motion of the captured frame is greater than the threshold in step 504, the controller 110 determines that the captured frame is a frame that has not undergone AF and displays in step 506 a message indicating that the captured frame is a frame that has not undergone AF.

While displaying the message or after displaying the message for a predetermined time, the controller 110 stores in step 507 the captured frame that has not undergone AF.

After storing the captured frame that has not undergone AF, the controller 110 performs CAF in the preview mode in step 508. In step 508, the controller 110 displays in a specific area of the display 160 a message indicating that the frame, which was previously captured and stored, has not undergone AF in the preview mode where CAF is performed.

For example, in the preview mode, since the previously captured and stored frame may be displayed in a thumbnail image in a specific area of the display 160, the controller 110 may display the frame having undergone AF and the frame not having undergone AF separately when displaying the frames in the thumbnail image. The controller 110 may indicate that the previously captured and stored frame is a frame that has not undergone AF, by displaying the edge line of its thumbnail image with a different color.

As is apparent form the foregoing description, the proposed apparatus and method for capturing and fine-tuning images in a mobile terminal may capture images that have undergone AF, in any circumstances in the preview mode where CAF is performed.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the scope of the invention as defined by the appended claims.

## Claims

1. An apparatus for capturing an image in a mobile terminal, the apparatus comprising:
a camera module arranged to capture image data; and
a controller arranged:
to process frames using image data received from the camera module in a preview mode in which Continuous Auto Focus, CAF, is performed;
to capture a frame if a capture signal is received while in the preview mode;
to measure a change in motion of the captured frame by comparing the captured frame with a previous frame that has undergone Auto Focus, AF; and
to determine that the captured frame has not undergone AF if the change in motion of the captured frame is greater than a threshold.

2. The apparatus of claim 1, wherein if the change in motion of the captured frame is less than or equal to the threshold, the controller is further arranged to determine that the captured frame has undergone AF and to store the captured frame.

3. The apparatus of claim 1 or claim 2, wherein if the captured frame has not undergone AF, the controller is further arranged to display a message indicating that the captured frame is a frame that has not undergone AF.

4. The apparatus of claim 3 wherein if the captured frame has not undergone AF, the controller is further arranged:
to switch to the preview mode if a store signal is not received within a predetermined time; or
to store the captured frame if a store signal is received within the predetermined time.

5. The apparatus of claim 3, wherein if the captured frame has not undergone AF, the controller is further arranged:
to display the captured frame if a frame view signal is received; and
to switch to the preview mode if a preview mode signal is received while displaying the captured frame; and
to store the captured frame if a store signal is received.

6. The apparatus of claim 3, wherein, if the captured frame has not undergone AF, the controller is further arranged:
to store the captured frame ;
to switch to the preview mode; and
to indicate in the preview mode that the previously captured frame has not undergone AF.

7. The apparatus of claim 6, wherein indicating in the preview mode that the previously captured frame has not undergone AF comprises the controller being arranged to display a previously captured frame in a thumbnail image in the preview mode and to display the thumbnail image differently depending upon whether the frame has undergone AF.

8. A method for capturing an image in a mobile terminal, the method comprising:
capturing image data;
processing frames using captured image data in a preview mode in which Continuous Auto Focus, CAF, is performed;
capturing a frame if a capture signal is received while in the preview mode;
measuring a change in motion of the captured frame by comparing the captured frame with a previous frame that has undergone Auto Focus, AF; and
determining that the captured frame has not undergone AF if the change in motion of the captured frame is greater than a threshold.

9. The method of claim 8, wherein if the change in motion of the captured frame is less than or equal to the threshold, the method further comprises determining that the captured frame has undergone AF and storing the captured frame.

10. The method of claim 8 or claim 9, wherein if the captured frame has not undergone AF, the method further comprises performing AF on the captured frame.

11. The method of claim 8 or claim 9, wherein if the captured frame has not undergone AF, the method further comprises displaying a message indicating that the captured frame is a frame that has not undergone AF.

12. The method of claim 11, wherein if the captured frame has not undergone AF, the method further comprises:
switching to the preview mode if a store signal is not received within a predetermined time; and
storing the captured frame that has not undergone AF if a store signal is received within a predetermined time.

13. The method of claim 11, wherein if the captured frame has not undergone AF, the method further comprises:
displaying the captured frame if a frame view signal is received;
switching to the preview mode if a preview mode signal is received while displaying the captured frame; and
storing the captured frame if a store signal is received while displaying the captured frame.

14. The method of claim 11, wherein if the captured frame has not undergone AF, the method further comprises:
storing the captured frame;
switching to the preview mode; and
indicating in the preview mode that the previously captured frame has not undergone AF.

15. The method of claim 14, wherein indicating in the preview mode that the previously captured frame has not undergone AF comprises displaying the previously captured frame in a thumbnail image in the preview mode and displaying the thumbnail image differently depending upon whether the frame has undergone AF.
